# EUROPÄISCHE PATENTSCHRIFT

(11) **EP 3 856 558 B1**
(45) Veröffentlichungstag und Bekanntmachung des Hinweises auf die Patenterteilung: **10.08.2022**
(21) Anmeldenummer: 19725975.7
(22) Anmeldetag: 21.05.2019
(51) Int. Cl.: B60K 37/06, G02B 27/01

(54) **VERFAHREN UND STEUEREINRICHTUNG ZUM BETREIBEN EINER AM KOPF TRAGBAREN ANZEIGEEINRICHTUNG IN EINEM KRAFTFAHRZEUG**
METHOD AND CONTROL DEVICE FOR OPERATING A HEAD-MOUNTED DISPLAY DEVICE IN A MOTOR VEHICLE
PROCÉDÉ ET DISPOSITIF DE COMMANDE POUR FAIRE FONCTIONNER UN DISPOSITIF D'AFFICHAGE PORTABLE SUR LA TÊTE DANS UN VÉHICULE AUTOMOBILE

(30) Priorität: 25.09.2018 DE 102018216383
(43) Veröffentlichungstag der Anmeldung: 04.08.2021
(73) Patentinhaber: Audi AG, 85045 Ingolstadt (DE)
(72) Erfinder: KÜHNE, Marcus, 92339 Beilngries (DE)
(86) Internationale Anmeldenummer: PCT/EP2019/063019
(87) Internationale Veröffentlichungsnummer: WO 2020/064152

(56) Entgegenhaltungen:
- DE-A1-102014 019 579
- US-A1- 2015 097 864
- US-A1- 2018 089 901
- US-B1- 9 459 692

## Beschreibung

Die Erfindung betrifft ein Verfahren zum Betreiben einer am Kopf tragbaren Anzeigeeinrichtung in einem Kraftfahrzeug der im Oberbegriff des Patentanspruchs 1 angegebenen Art. Des Weiteren betrifft die Erfindung noch eine Steuereinrichtung zum Betreiben einer am Kopf tragbaren Anzeigeeinrichtung in einem Kraftfahrzeug sowie ein Kraftfahrzeug mit solch einer Steuereinrichtung.

Es ist sehr wahrscheinlich, dass zukünftig immer mehr Möglichkeiten bereitgestellt werden, mittels welchen Fahrzeuginsassen während der Fahrt mit einem Kraftfahrzeug virtuelle Erfahrungen konsumieren können. Bei der Inszenierung solcher virtuellen Erfahrungen in Kraftfahrzeugen, auch als In-Car-VR-Experiences bezeichnet, ist es gängig, angezeigte virtuelle Inhalte zur Erhöhung der Immersion und zur Vermeidung der so genannten Simulator Sickness mit einer Bewegung des betreffenden Kraftfahrzeugs zu harmonisieren.

So zeigt beispielsweise die DE 10 2014 220 053 A1 ein Verfahren zum Betreiben einer am Kopf tragbaren Anzeigeeinrichtung in einem Kraftfahrzeug, bei welchem die Anzeigeeinrichtung zum Anzeigen einer virtuellen Umgebung, innerhalb welcher sich ein die Anzeigeeinrichtung tragender Fahrzeuginsasse abgestimmt auf eine erfasste Fortbewegung des Kraftfahrzeugs virtuell fortbewegt, angesteuert wird.

Die DE 10 2017 005 982 A1 beschreibt ein Verfahren zur Vermeidung oder Reduzierung von Kinetose-Symptomen bei der Verwendung einer Virtual-Reality-Brille während einer Fahrt in einem Fahrzeug. Neben einer Darstellung von Wiedergabeinhalten wird eine zusätzliche bewegliche Netzstruktur dargestellt, wobei ferner eine Bewegung der Netzstruktur derart erfolgt, dass diese gleichgewichtskonform einem aktuellen fahrdynamischen Bewegungszustand des Fahrzeugs entspricht.

Die DE 10 2014 220 001 A1 zeigt eine autonome Fahrzeugmediensteuerung. Dabei wird bestimmt, ob ein Ereignis aufgetreten ist, welches ein Anhalten oder eine Modifikation der Wiedergabe des Medieninhalts rechtfertigt. Dies kann beispielsweise der Fall sein, wenn sich ein Fahrzeug in einer Verkehrssituation befindet, welche eine erhöhte Aufmerksamkeit eines Insassen des Fahrzeugs erfordert, welcher den Medieninhalt gerade konsumiert. In diesem Fall kann die Wiedergabe des Medieninhalts angehalten werden.

Die US2018/089901 zeigt ein Verfahren zum Betreiben einer am Kopf tragbaren Anzeigeeinrichtung in einem Kraftfahrzeug, bei welchem die Anzeigeeinrichtung zum Anzeigen einer virtuellen Umgebung, innerhalb welcher sich ein die Anzeigeeinrichtung tragender Fahrzeuginsasse abgestimmt auf eine erfasste Fortbewegung des Kraftfahrzeugs virtuell fortbewegt, angesteuert wird.

Es ist die Aufgabe der vorliegenden Erfindung, eine Lösung bereitzustellen, welche eine besonders immersive und stringente virtuelle Erfahrung mittels einer am Kopf eines Fahrzeuginsassen getragenen Anzeigeeinrichtung ermöglicht.

Diese Aufgabe wird durch ein Verfahren sowie durch eine Steuereinrichtung zum Betreiben einer am Kopf tragbaren Anzeigeeinrichtung mit den Merkmalen der unabhängigen Patentansprüche gelöst. Vorteilhafte Ausgestaltungen mit zweckmäßigen und nicht-trivialen Weiterbildungen der Erfindung sind in den abhängigen Ansprüchen angegeben.

Bei dem erfindungsgemäßen Verfahren zum Betreiben einer am Kopf tragbaren Anzeigeeinrichtung in einem Kraftfahrzeug wird die Anzeigeeinrichtung zum Anzeigen einer virtuellen Umgebung, innerhalb welcher sich ein die Anzeigeeinrichtung tragender Fahrzeuginsasse abgestimmt auf eine erfasste Fortbewegung des Kraftfahrzeugs virtuell fortbewegt, angesteuert. Bei der am Kopf tragbaren Anzeigeeinrichtung kann es sich beispielsweise um eine Virtual-Reality-Brille, eine Augmented-Reality-Brille oder auch um Augmented-Reality-Kontaktlinsen handeln. Die Fortbewegung des Kraftfahrzeugs charakterisierende Daten können beispielsweise vom Kraftfahrzeug selbst bereitgestellt und zumindest mittelbar an die Anzeigeeinrichtung übertragen werden, sodass die virtuelle Fortbewegung abgestimmt auf die reale Fortbewegung des Kraftfahrzeugs erfolgen kann. Beschleunigt oder bremst das Kraftfahrzeug, so wird der die Anzeigeeinrichtung tragende Fahrzeuginsasse entsprechend virtuell innerhalb der angezeigten virtuellen Umgebung beschleunigt. Dass kann sowohl für Längs- als auch Querbeschleunigungen sowie auch für Beschleunigungen in Hochrichtung gelten. Genauso können auch rotatorische Bewegungen und Beschleunigungen, wie z.B. Gierbeschleunigungen oder Gierbewegungen des Kraftfahrzeugs in der virtuellen Umgebung umgesetzt werden.

Das erfindungsgemäße Verfahren zeichnet sich dadurch aus, dass wenigstens ein potenzieller Anhaltepunkts des Kraftfahrzeugs ermittelt wird. Sobald eine Verzögerung des Kraftfahrzeugs innerhalb einer vorgegebenen Umgebung des ermittelten potenziellen Anhaltepunkts erfasst wird, wird die Anzeigeeinrichtung zum Ausgeben einer virtuellen Inszenierung innerhalb der virtuellen Umgebung angesteuert, wobei die virtuelle Inszenierung eine Verzögerung der virtuellen Fortbewegung innerhalb der virtuellen Umgebung entsprechend der Verzögerung des Kraftfahrzeugs bewirkt.

Der Erfindung liegt die Erkenntnis zugrunde, dass es bei der Inszenierung von passiven und/oder interaktiven virtuellen Erfahrungen, so genannten In-Car-VR-Experiences, deren Inhalte zur Erhöhung der Immersion und Vermeidung von Simulator Sickness mit der Bewegung des Fahrzeugs harmonisiert werden, besondere Herausforderungen in Bezug auf ein stringentes Storytelling aufgrund nur schwer oder nicht vorhersehbarer Stopps des betreffenden Fahrzeugs gibt. Das heißt, es ist vorab nur schwer oder nicht absehbar, wann, wo und wie lange das betreffende Kraftfahrzeug entlang einer bestimmten Strecke zum Halt kommen wird. Dies macht es schwierig, eine durchgehende und in sich glaubwürdige, also stringente virtuelle Erfahrung zu kreieren.

Genau dieser Erkenntnis und Problemstellung widmet sich die Erfindung, indem wenigstens ein potenzieller, also zukünftig möglicher, Anhaltepunkt des Kraftfahrzeugs ermittelt und sobald eine Verzögerung des Kraftfahrzeugs innerhalb einer vorgegebenen Umgebung des ermittelten potenziellen Anhaltepunkts erfasst wird, die am Kopf des Fahrzeuginsassen getragene Anzeigeeinrichtung derart angesteuert wird, dass innerhalb der zuvor bereits wiedergegebenen virtuellen Umgebung eine virtuelle Inszenierung erfolgt, die eine Verzögerung der virtuellen Fortbewegung innerhalb der virtuellen Umgebung entsprechend der Verzögerung des Kraftfahrzeugs bewirkt.

Diese virtuelle Inszenierung wird also vor einem ermittelten potenziellen Anhaltepunkt in die virtuelle Erfahrung, also innerhalb der angezeigten virtuellen Umgebung, integriert. Kommt es dazu, dass das Kraftfahrzeug beispielsweise vor dem ermittelten potenziellen Anhaltepunkt tatsächlich die Fahrt verzögert und z.B. am Anhaltepunkt anhält, so führt die ausgegebene virtuelle Inszenierung dazu, das sich für den Fahrzeuginsassen, der die am Kopf tragbare Anzeigeeinrichtung aufgesetzt hat, eine besonders immersive und stringente virtuelle Erfahrung ergibt. Bei dem zumindest einen potenziellen Anhaltepunkt des Kraftfahrzeugs kann es sich beispielsweise um eine Ampel, eine Kreuzung, eine Einmündung einer Straße, ein Stauende oder um ein anhaltendes anderes Fahrzeug handeln. So ist es beispielsweise auch bei unmittelbaren und zufälligen Ampelstopps möglich, ein stimmiges virtuelles Gesamterlebnis mittels der am Kopf getragenen Anzeigeeinrichtung, also eine besonders immersive und stringente virtuelle Erfahrung, zu kreieren.

Es ist also erfindungsgemäß vorgesehen, eine Erkennung eines bevorstehenden Stopps bei Annäherung an einen potenziellen Anhaltepunkt mit der Wiedergabe der virtuellen Erfahrung mittels der am Kopf tragbaren Anzeigeeinrichtung zu verknüpfen. Damit sich die virtuelle Erfahrung schlüssig anfühlt, geschieht innerhalb der angezeigten virtuellen Umgebung in Form der virtuellen Inszenierung etwas, was einen Anhaltevorgang des Kraftfahrzeugs vor oder am ermittelten potenziellen Anhaltepunkt schlüssig erklärt. Dadurch wirkt sich ein Anhalten des Kraftfahrzeugs, insbesondere auch wenn es zu einem abrupten Anhalten kommt, nicht als inhaltlicher Bruch innerhalb der virtuellen Erfahrung aus, was bei virtuellen Erlebnissen die so wichtige Immersion ansonsten zerstören würde. Die virtuelle Inszenierung ist dabei inhaltlich und optisch an die zuvor wiedergegebene virtuelle Erfahrung angepasst. Handelt es sich bei der wiedergegebenen virtuellen Erfahrung beispielsweise um ein Computerspiel, so umfasst die virtuelle Inszenierung eines oder mehrere virtuelle Elemente, welche sich nahtlos in die Story des Computerspiels einfügen. Das virtuelle Erlebnis des Fahrzeuginsassen, der die Anzeigeeinrichtung am Kopf trägt, erfolgt so auch insbesondere bei abrupten Stopps des Kraftfahrzeugs besonders immersiv und stringent, da eine virtuelle Verzögerung innerhalb der virtuellen Umgebung, welche sich aufgrund einer Verzögerung des Kraftfahrzeugs ergibt, durch die besagte virtuelle Inszenierung stringent erläutert wird.

Eine vorteilhafte Ausführungsform der Erfindung sieht vor, dass der zumindest eine potenzielle Anhaltepunkt des Kraftfahrzeugs ermittelt wird, indem zumindest eine der folgenden bereitgestellten Daten ausgewertet werden:
- eine Umgebung des Kraftfahrzeugs charakterisierende Sensordaten;
- digitale Kartendaten;
- Verkehrsflussdaten;
- Car2Car-Daten;
- ein Fahrverhalten eines Fahrers des Kraftfahrzeugs charakterisierende Daten.

Unterschiedlichste Sensoren des Kraftfahrzeugs können beispielsweise dafür genutzt werden, eine Umgebung des Kraftfahrzeugs zu erfassen und entsprechende Sensordaten bereitzustellen. Durch Auswertung dieser Sensordaten ist es möglich, prädiktiv potenzielle Anhaltepunkte des Kraftfahrzeugs zu ermitteln, beispielsweise weil eine Ampel, eine Kreuzung, eine Einmündung, eine Straße, ein Stauende oder beispielsweise ein anhaltendes anderes Fahrzeug frühzeitig erkannt wird. Auch können digitale Kartendaten verwendet werden, sodass basierend darauf beispielsweise entlang einer befahrenen Strecke des Kraftfahrzeugs noch kommende Kreuzungen, Stoppschilder und dergleichen frühzeitig erkannt werden können. Zudem ist es auch möglich, online Verkehrsflussdaten zu empfangen und auszuwerten, um potenzielle Anhaltepunkte des Kraftfahrzeugs frühzeitig zu ermitteln. Auch ist es möglich, dass das Kraftfahrzeug von anderen Kraftfahrzeugen über eine Car-to-Car-Kommunikation entsprechende Daten erhält. Ein vorausfahrendes Fahrzeug kann so beispielsweise an das betreffende Kraftfahrzeug Informationen über seine Eigenbewegung senden, infolgedessen das Kraftfahrzeug frühzeitig erkennen kann, dass ein vorausfahrendes Fahrzeug gerade bremst oder schon angehalten hat. Zudem ist es auch möglich, ein Fahrverhalten eines Fahrers des Kraftfahrzeugs charakterisierende Daten auszuwerten und zu analysieren, falls der Fahrer das Kraftfahrzeug selbst fahren sollte. Beispielsweise ist es möglich, basierend auf dem unmittelbaren Fahrverhalten des Fahrers abzuschätzen, ob, wann und wo mit einem potenziellen Anhaltepunkt des Kraftfahrzeugs zu rechnen ist. Die vorstehend genannten Daten können natürlich auch in unterschiedlichsten Kombinationen miteinander verwendet werden, um einen oder mehrere potenzielle Anhaltepunkte des Kraftfahrzeugs besonders zuverlässig zu ermitteln.

Die Erfindung sieht vor, dass die virtuelle Inszenierung nur dann ausgegeben wird, wenn die Verzögerung des Kraftfahrzeugs zumindest eine vorgegebene Verzögerungsstärke erreicht. So kann beispielsweise sichergestellt werden, dass bei besonders abrupten Verzögerungen die virtuelle Inszenierung auf jeden Fall eingeblendet wird, um eine besonders stringente virtuelle Erfahrung zu ermöglichen. Verzögert das Kraftfahrzeug hingegen in der Realität sehr sanft vor dem potenziellen Anhaltepunkt, so kann es gegebenenfalls vorgesehen sein, dass die besagte virtuelle Inszenierung ausbleibt, da dies für eine stringente virtuelle Erfahrung nicht zwingend notwendig ist.

Gemäß einer weiteren vorteilhaften Ausführungsform der Erfindung ist es vorgesehen, dass sobald des Kraftfahrzeug nach der Verzögerung mit zumindest einer vorgegebenen Beschleunigung beschleunigt, die virtuelle Inszenierung beendet und die virtuelle Fortbewegung entsprechend der Fortbewegung des Kraftfahrzeugs erfolgt. Wird mit anderen Worten also eine definierte Anfahrdynamik nach der Verzögerung durch das Kraftfahrzeug erreicht, kann es vorgesehen sein, die virtuelle Inszenierung wieder zu beenden. Durch Beenden der virtuellen Inszenierung wird für den Fahrzeuginsassen, der die Anzeigeeinrichtung trägt, innerhalb der virtuellen Umgebung ein besonders schlüssiges virtuelles Erlebnis kreiert, welches die Weiterfahrt und Beschleunigung des Kraftfahrzeugs und somit die real wahrgenommene Beschleunigung des Fahrzeuginsassen erklärt.

In weiterer vorteilhafter Ausgestaltung der Erfindung ist vorgesehen, dass falls eine Verzögerung des Kraftfahrzeugs beim Passieren des Anhaltepunkts unterbleibt, die virtuelle Inszenierung ebenfalls unterbleibt. Fährt das Kraftfahrzeug beispielsweise auf eine Ampel zu, welche zuvor als ein potenzieller Anhaltepunkt des Kraftfahrzeugs ermittelt worden ist, und schaltet diese Ampel beispielsweise rechtzeitig von Rot wieder auf Grün, sodass das Kraftfahrzeug ohne Verzögerung die Ampel passieren kann, unterbleibt die virtuelle Inszenierung, welche ansonsten die reale virtuelle Umgebung des Kraftfahrzeugs innerhalb der virtuellen Erfahrung stringent erläutert hätte.

Eine weitere vorteilhafte Ausführungsform der Erfindung sieht vor, dass die virtuelle Umgebung eine Weltraumszenerie umfasst, durch welche der die Anzeigeeinrichtung tragende Fahrzeuginsasse virtuell mit einem Raumschiff fliegt, wobei als die virtuelle Inszenierung ein Defekt am Raumschiff auftritt, welcher solange das Kraftfahrzeug am potenziellen Anhaltepunkt steht, repariert wird. Die reale dynamische Veränderung und die virtuelle dynamische Veränderung aufgrund der Verzögerung des Kraftfahrzeugs an dem Haltepunkt kann so schlüssig innerhalb der virtuellen Umgebung für den Fahrzeuginsassen, der die Anzeigeeinrichtung aufgesetzt hat, erklärt werden. Sobald das Kraftfahrzeug nach dem Anhalten am betreffenden Haltepunkt weiter fährt, wird die virtuelle Reparatur des zuvor inszenierten Defekts am Raumschiff beendet und das Raumschiff kann entsprechend der Fortbewegung des Kraftfahrzeugs sich ebenfalls innerhalb der virtuellen Umgebung fortbewegen. In diesem Zusammenhang ist es auch denkbar, dass beispielsweise im Cockpit des Raumschiffs bei entsprechender Annäherung an den potenziellen Haltepunkt bereits eine Warnleuchte eingeblendet wird, welche den potenziellen Defekt am Raumschiff signalisiert. Kommt es tatsächlich zum Stilstand des Kraftfahrzeugs, so tritt dann im Rahmen der Inszenierung der Defekt am Raumschiff tatsächlich auf, welcher dann solange das Kraftfahrzeug am Anhaltepunkt steht, repariert wird. Dadurch ergibt sich innerhalb der virtuellen Erfahrung eine besonders schlüssige Erläuterung, da der Effekt nicht urplötzlich am Raumschiff auftritt. Sollte hingegen das Kraftfahrzeug an dem potenziellen Anhaltepunkt gar nicht anhalten, so kann die besagte Warnleuchte beispielsweise wieder erlöschen, ohne dass der Defekt am Raumschiff innerhalb der virtuellen Umgebung auftritt.

Eine alternative vorteilhafte Ausführungsform der Erfindung sieht vor, dass ab einer vorgegebenen Annäherung des Kraftfahrzeugs an die vorgegebene Umgebung des ermittelten potenziellen Anhaltepunkts zumindest ein virtuelles Element innerhalb der virtuellen Umgebung erscheint, welches dazu ausgelegt ist, als Bestandteil der Inszenierung die Verzögerung der virtuellen Fortbewegung innerhalb der virtuellen Umgebung entsprechend der Verzögerung des Kraftfahrzeugs zu bewirken. Dieses virtuelle Element kann ein beliebiges virtuelles Element sein, welches beim Auftreten der virtuellen Inszenierung diese als schlüssig erscheinen lässt. Dies kann auch die vorstehend bereits erwähnte Warnleuchte sein.

Eine weitere vorteilhafte Ausführungsform der Erfindung sieht vor, dass falls eine Verzögerung des Kraftfahrzeugs beim Passieren des Anhaltepunkts unterbleibt, das zuvor erschienene virtuelle Element nach Passieren des Anhaltepunkts verschwindet. Dadurch ergibt sich für den die Anzeigeeinrichtung tragende Fahrzeuginsassen ein besonders realistisch anmutendes virtuelles Erlebnis, da das zuvor erschienene virtuelle Element wieder ausgeblendet wird beziehungsweise verschwindet, was bei einem Anhalten ansonsten zu einer stringente Erläuterung der Verzögerung innerhalb der virtuellen Umgebung beigetragen hätte.

In weiterer vorteilhafter Ausgestaltung der Erfindung ist es vorgesehen, dass die virtuelle Umgebung eine Weltraumszenerie umfasst, durch welche der die Anzeigeeinrichtung tragende Fahrzeuginsasse virtuell mit einem ersten Raumschiff fliegt, wobei als das zumindest eine virtuelle Element ein zweites Raumschiff erscheint und als die virtuelle Inszenierung das erste Raumschiff mittels eines Traktorstrahls des zweiten Raumschiffs entsprechend der Verzögerung des Kraftfahrzeugs verzögert wird. Sollte das Kraftfahrzeug als tatsächlich am potenziellen Anhaltepunkt anhalten, so wird die virtuelle Fortbewegung mit dem ersten Raumschiff durch den Traktorstrahl entsprechend der Verzögerung des Kraftfahrzeugs verzögert. Dadurch kann beispielsweise ein Ampelstopp des Kraftfahrzeugs schlüssig erklärt werden. Hält das Kraftfahrzeug beispielsweise an der besagten Ampel nicht an, weil diese rechtzeitig auf grün umspringt, so kann es vorgesehen sein, dass das zweite Raumschiff lediglich parallel zum ersten Raumschiff fliegt und den Traktorstrahl gar nicht betätigt.

Die erfindungsgemäße Steuereinrichtung ist dazu eingerichtet, eine am Kopf tragbare Anzeigeeinrichtung zum Durchführen des erfindungsgemäßen Verfahren oder eine vorteilhaften Ausführungsform des erfindungsgemäßen Verfahrens anzusteuern. Vorteilhafte Ausgestaltungen des erfindungsgemäßen Verfahrens sind als vorteilhafte Ausgestaltungen der erfindungsgemäßen Steuereinrichtung und umgekehrt anzusehen, wobei die Steuereinrichtung insbesondere Mittel zur Durchführung der Verfahrensschritte aufweist.

Das erfindungsgemäße Kraftfahrzeug umfasst die erfindungsgemäße Steuereinrichtung oder eine vorteilhafte Ausführungsform der erfindungsgemäßen Steuereinrichtung. Alternativ ist es auch möglich, dass die am Kopf tragbare Anzeigeeinrichtung selbst die Steuereinrichtung umfasst. In dem Fall kann die Steuereinrichtung unterschiedlichste Datenschnittstellen aufweisen, mittels welchen insbesondere Sensordaten des Kraftfahrzeugs, digitale Kartendaten, Verkehrsflussdaten, Car2Car-Daten und ein Fahrverhalten des Fahrers des Kraftfahrzeugs charakterisierende Daten empfangen werden können.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine schematische Darstellung eines Kraftfahrzeugs, in welchem ein Fahrzeuginsasse sitzt, der eine Virtual-Reality-Brille aufgesetzt hat, wobei das Kraftfahrzeug auf einen potenziellen Anhaltepunkt zufährt; und in
- Fig. 2: eine schematische Darstellung einer mittels der Virtual-Reality-Brille angezeigten virtuellen Umgebung.

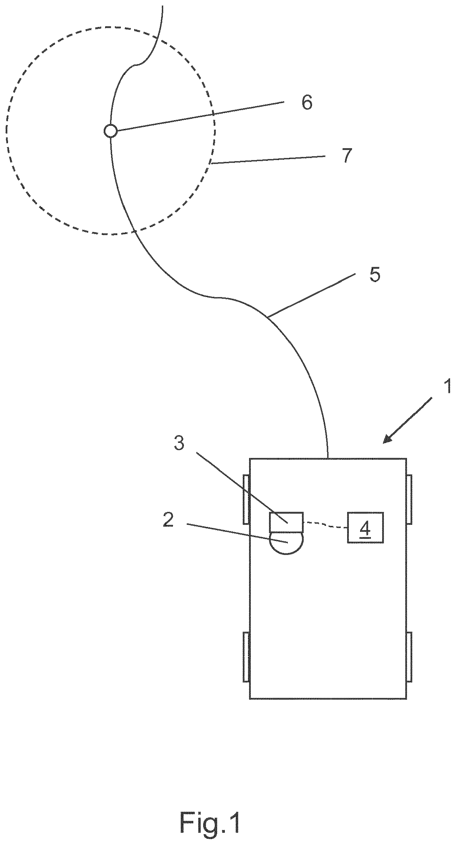

Ein Kraftfahrzeug 1, in dem ein Fahrzeuginsasse 2 mit aufgesetzter Virtual-Reality-Brille 3 sitzt, ist in einer schematischen Darstellung in Fig. 1 gezeigt. Zudem ist noch eine Steuereinrichtung 4 schematisch dargestellt, welche dazu eingerichtet ist, die Virtual-Reality-Brille 3 anzusteuern. Bei dem Kraftfahrzeug 1 kann es sich beispielsweise um ein autonom fahrendes Kraftfahrzeug 1 handeln, sodass der Fahrzeuginsasse 2 ohne Wahrnehmung der Fahraufgabe problemlos virtuelle Inhalte mittels der Virtual-Reality-Brille 3 konsumieren kann. Es kann sich auch um ein nicht-autonom fahrendes Kraftfahrzeug 1 handeln, wobei in dem Fall ein hier nicht dargestellter Fahrer das Kraftfahrzeug 1 fährt und der Fahrzeuginsasse 2 lediglich ein Mitfahrer beziehungsweise Beifahrer ist. Das Kraftfahrzeug 1 befährt eine bestimmte Strecke 5, entlang welcher sich verschiedene potenzielle Anhaltepunkte 6 befinden können. Bei diesen potenziellen Anhaltepunkten 6 kann es sich beispielsweise um Ampeln, Kreuzungen, Einmündungen einer Straße, ein Stauende oder auch um anhaltende andere Fahrzeuge handeln. Zudem ist schematisch noch eine Umgebung 7 des einzig hier dargestellten potenziellen Anhaltepunkts 6 gekennzeichnet, wobei auf diese Umgebung 7 im späteren Verlauf noch näher eingegangen wird.

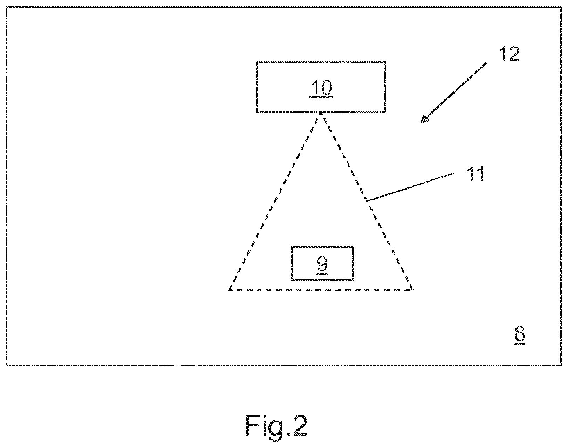

In Fig. 2 ist stark schematisiert eine virtuelle Umgebung 8 dargestellt, welche mittels der Virtual-Reality-Brille 3 angezeigt wird. Während der Fahrt mit dem Kraftfahrzeug 1 steuert die Steuereinrichtung 4 die Virtual-Reality-Brille 3 zum Anzeigen der virtuellen Umgebung 8 an, innerhalb welcher sich der die Virtual-Reality-Brille 3 tragende Fahrzeuginsasse 2 abgestimmt auf eine erfasste Fortbewegung des Kraftfahrzeugs 1 virtuell fortbewegt. Im vorliegend schematisch angedeuteten Fall umfasst die virtuelle Umgebung 8 eine Weltraumszenerie, durch welche der die Virtual-Reality-Brille 3 tragende Fahrzeuginsasse 2 virtuell mit einem ersten Raumschiff 9 fliegt. Die vorliegende Darstellung entspricht dabei nicht der virtuellen Perspektive des Fahrzeuginsassen 2.

In der vorliegenden Darstellung fliegt oberhalb vom ersten Raumschiff 9 noch ein zweites Raumschiff 10, welches mit einem Traktorstrahl 11 das erste Raumschiff 9 verzögert beziehungsweise anhält. Das zweite Raumschiff 10 bildet gemeinsam mit dem Traktorstrahl 11 eine virtuelle Inszenierung 12, die eine Verzögerung der virtuellen Fortbewegung innerhalb der virtuellen Umgebung 8 bewirkt. Dies dient dazu, bei einem tatsächlichen Verzögerungsvorgang beziehungsweise Anhaltevorgang am potenziellen Anhaltepunkt 6 (siehe Fig. 1) die sich dadurch ergebende virtuelle Verzögerung innerhalb der virtuellen Umgebung 8 schlüssig erscheinen zu lassen.

Nachfolgend wird ein Verfahren zum Betreiben der Virtual-Reality-Brille 3 näher erläutert. Während der Fahrt mit dem Kraftfahrzeug 1 erhält die Steuereinrichtung 4 fortlaufend Daten, welche die Fortbewegung des Kraftfahrzeugs 1 charakterisieren. In Abhängigkeit von diesen die Fortbewegung des Kraftfahrzeugs charakterisierenden Daten steuert die Steuereinrichtung 4 die Virtual-Reality-Brille 3 zum Anzeigen der virtuellen Umgebung 8 an, innerhalb welcher sich der Fahrzeuginsasse 2 abgestimmt auf die erfasste reale Fortbewegung des Kraftfahrzeugs 1 mit dem ersten Raumschiff 9 fortbewegt. Während der Befahrung der Strecke 5 ermittelt die Steuereinrichtung 4 fortlaufend potenzielle Anhaltepunkte 6 des Kraftfahrzeugs, bei welchen es sich beispielsweise um Ampeln, Kreuzungen, Einmündungen von Straßen, Stauenden oder um andere anhaltende Fahrzeuge handeln kann.

Beispielsweise kann die Steuereinrichtung 4 eine Umgebung des Kraftfahrzeugs 1 charakterisierende Sensordaten vom Kraftfahrzeug 1 empfangen. Basierend auf diesen Sensordaten kann die Steuereinrichtung 4 in Fahrtrichtung vorausschauend potenzielle Anhaltepunkte 6 erkennen. Auch ist es möglich, dass die Steuereinrichtung 4 digitale Kartendaten empfängt, sodass basierend auf diesen Daten potenzielle Anhaltepunkte 6 bestimmt werden können. Die Steuereinrichtung 4 kann beispielsweise auch Verkehrsflussdaten von einem hier nicht dargestellten Server oder dergleichen empfangen, um potenzielle Anhaltepunkte 6 entlang der Strecke 5 frühzeitig zu erkennen. Auch ist es möglich, dass die Steuereinrichtung 4 Car-to-Car-Daten von anderen hier nicht dargestellten, insbesondere vorausfahrenden Kraftfahrzeugen erhält, um so basierend darauf Verzögerungen oder ein Anhalten vorausfahrender Fahrzeuge und somit potenzielle Anhaltepunkte 6 zu ermitteln. Falls das Kraftfahrzeug 1 von einem hier nicht dargestellten Fahrer manuell gefahren wird, ist es auch möglich, dass die Steuereinrichtung 4 ein Fahrverhalten des Fahrers charakterisierende Daten erhält, um basierend darauf die potenziellen Anhaltepunkte 6 zu ermitteln.

Sobald eine Verzögerung des Kraftfahrzeugs 1 innerhalb der vorgegebenen Umgebung 7 des jeweils ermittelten potenziellen Anhaltepunkts 6 erfasst wird, steuert die Steuereinrichtung 4 die Virtual-Reality-Brille 3 zum Ausgeben der virtuellen Inszenierung 12 innerhalb der virtuellen Umgebung 8 an. Konkret bedeutet dies im beispielhaft in Fig. 2 beschriebenen Fall, dass beispielsweise ab einer bestimmten Annäherung des Kraftfahrzeugs 1 an die Umgebung 7 das zweite Raumschiff 10 im virtuellen Sichtfeld des Fahrzeuginsassen 2 innerhalb der virtuellen Umgebung 8 erscheint. Bremst dann das Kraftfahrzeug 1 innerhalb der Umgebung 7 beim Annähern an den potenziellen Anhaltepunkt 6 tatsächlich ab, so steuert die Steuereinrichtung 4 die Virtual-Reality-Brille 3 derart an, dass im Zuge der virtuellen Inszenierung 12 der Traktorstrahl 11 innerhalb der virtuellen Umgebung 8 aktiviert wird und infolgedessen entsprechend der realen Verzögerung des Kraftfahrzeugs 1 die virtuelle Fortbewegung verzögert, indem der Traktorstrahl 11 die Fortbewegung des ersten Raumschiffs 9 verzögert.

Fährt das Kraftfahrzeug 1 beispielsweise nach einem Anhaltemanöver am potenziellen Anhaltepunkt 6 wieder an, so wird die virtuelle Inszenierung 12 zumindest insofern wieder beendet, dass der Traktorstrahl 11 beendet wird und die virtuelle Fortbewegung des ersten Raumschiffs 9 innerhalb der virtuellen Umgebung 8 entsprechend der realen Fortbewegung des Kraftfahrzeugs 1 ermöglicht. Tritt hingegen der Fall auf, dass das Kraftfahrzeug 1 sich dem potenziellen Anhaltepunkt 6 nähert, dort aber nicht anhält und den potenziellen Anhaltepunkt 6 beispielsweise verzögerungsfrei passiert, so wird der Traktorstrahl 11 innerhalb der virtuellen Umgebung 8 gar nicht erst aktiviert. Anschließend kann es beispielsweise vorgesehen sein, dass das zuvor erschienen zweite Raumschiff 10 nach einer gewissen Phase des Parallelflugs zum ersten Raumschiff 9 wieder aus dem virtuellen Sichtfeld und somit aus der virtuellen Umgebung 8 verschwindet.

Entgegen der Darstellung in Fig. 2 ist es beispielsweise auch möglich, dass der Fahrzeuginsasse 2 innerhalb der virtuellen Umgebung 8 zwar wiederum innerhalb einer Weltraumszenerie mit einem Raumschiff fliegt, wobei allerdings als die virtuelle Inszenierung ein Defekt am Raumschiff auftritt, welcher solange das Kraftfahrzeug 1 am potenziellen Anhaltepunkt 6 steht, repariert wird. Dadurch kann dem Fahrzeuginsassen 2, der die Virtual-Reality-Brille 3 aufgesetzt hat, ebenfalls besonders schlüssig innerhalb der virtuellen Erfahrung erläutert werden, warum er innerhalb der virtuellen Umgebung 8 anhält.

In dem Zusammenhang kann es beispielsweise auch vorgesehen sein, dass bei hinreichender Annäherung an den potenziellen Anhaltepunkt 6, beispielsweise beim Eintritt in die Umgebung 7 des potenziellen Anhaltepunkts 6, innerhalb eines Cockpits des Raumschiffs eine Warnleuchte aufleuchtet, welche auf einen potenziellen Defekt des Raumschiffs hinweist. Die Warnleuchte kann beispielsweise zunächst grün im Cockpit des Raumschiffs aufleuchten, wobei diese Leuchte dann in Orange umschlägt, sobald das Kraftfahrzeug 1 in die Umgebung 7 eintritt. Sollte das Kraftfahrzeug 1 dann tatsächlich verzögern, um am potenziellen Anhaltepunkt 6 zu halten, kann diese Leuchte zum Beispiel in Rot umschlagen und der besagte Defekt in Form der virtuellen Inszenierung auftreten, welcher solange das Kraftfahrzeug 1 am potenziellen Anhaltepunkt 6 steht, repariert wird. Tritt hingegen der Fall auf, dass das Kraftfahrzeug den potenziellen Anhaltepunkt 6 einfach passiert, so kann die zuvor orange aufleuchtende Leuchte wieder in Grün umschlagen, was eine problemlose Fortbewegung mit dem Raumschiff innerhalb der virtuellen Umgebung 8 schlüssig erscheinen lässt.

Die beschriebenen Ausführungsbeispiele im Zusammenhang mit den Weltraumszenerien beziehungsweise Raumschiffen ist beispielhaft zu verstehen. Grundsätzlich können unterschiedlichste virtuelle Inszenierungen in Form unterschiedlichster virtueller Sequenzen mittels der Virtual-Reality-Brille 3 angezeigt werden, um ein tatsächliches Verzögern und Anhalten des Kraftfahrzeugs 1 an potenziellen Haltepunkten 6 und somit auch ein virtuelles Verzögern und Anhalten innerhalb der angezeigten virtuellen Umgebung 8 schlüssig erscheinen zu lassen. Statt der Virtual-Reality-Brille 3 können auch andere am Kopf tragbare Anzeigeeinrichtungen, wie beispielsweise Augmented-Reality-Brillen oder Augmented-Reality-Kontaktlinsen zum Einsatz kommen. Insgesamt wird durch das erläuterte Verfahren und die erläuterte Steuereinrichtung 4 also eine Lösung bereitgestellt, welche eine besonders immersive und stringente virtuelle Erfahrung mittels einer am Kopf eines Fahrzeuginsassen 2 getragenen Anzeigeeinrichtung ermöglicht.

## Patentansprüche

1. Verfahren zum Betreiben einer am Kopf tragbaren Anzeigeeinrichtung (3) in einem Kraftfahrzeug (1), bei welchem die Anzeigeeinrichtung (3) zum Anzeigen einer virtuellen Umgebung (8), innerhalb welcher sich ein die Anzeigeeinrichtung (3) tragender Fahrzeuginsasse (2) abgestimmt auf eine erfasste Fortbewegung des Kraftfahrzeugs (1) virtuell fortbewegt, angesteuert wird,
**gekennzeichnet durch** die Schritte:
- Ermitteln wenigstens eines potenziellen Anhaltepunkts (6) des Kraftfahrzeugs (1);
- sobald eine Verzögerung des Kraftfahrzeugs (1) innerhalb einer vorgegebenen Umgebung (7) des ermittelten potenziellen Anhaltepunkts (6) erfasst wird: Ansteuern der Anzeigeeinrichtung (3) zum Ausgeben einer virtuellen Inszenierung (12) innerhalb der virtuellen Umgebung (8), welche eine Verzögerung der virtuellen Fortbewegung innerhalb der virtuellen Umgebung (8) entsprechend der Verzögerung des Kraftfahrzeugs (1) bewirkt.

2. Verfahren nach Anspruch 1,
**dadurch gekennzeichnet, dass**
es sich bei dem zumindest einen potenziellen Anhaltepunkt (6) des Kraftfahrzeugs (1) um eine Ampel, eine Kreuzung, eine Einmündung einer Straße, ein Stauende oder um ein anhaltendes anderes Fahrzeug handelt.

3. Verfahren nach Anspruch 1 oder 2,
**dadurch gekennzeichnet, dass**
der zumindest eine potenzielle Anhaltepunkt (6) des Kraftfahrzeugs (1) ermittelt wird, indem zumindest eine der folgenden bereitgestellten Daten ausgewertet werden:
- eine Umgebung des Kraftfahrzeugs (1) charakterisierende Sensordaten;
- digitale Kartendaten;
- Verkehrsflussdaten;
- Car2Car-Daten;
- ein Fahrverhalten eines Fahrers des Kraftfahrzeugs (1) charakterisierende Daten.

4. Verfahren nach einem der vorhergehenden Ansprüche,
**dadurch gekennzeichnet, dass**
die virtuelle Inszenierung (12) nur dann ausgegeben wird, wenn die Verzögerung des Kraftfahrzeugs (1) zumindest eine vorgegebene Verzögerungsstärke erreicht.

5. Verfahren nach einem der vorhergehenden Ansprüche,
**dadurch gekennzeichnet, dass**
sobald des Kraftfahrzeug (1) nach der Verzögerung mit zumindest einer vorgegebenen Beschleunigung beschleunigt, die virtuelle Inszenierung (12) beendet und die virtuelle Fortbewegung entsprechend der Fortbewegung des Kraftfahrzeugs (1) erfolgt.

6. Verfahren nach einem der vorhergehenden Ansprüche,
**dadurch gekennzeichnet, dass**
falls eine Verzögerung des Kraftfahrzeugs (1) beim Passieren des Anhaltepunkts (6) unterbleibt, die virtuelle Inszenierung (12) ebenfalls unterbleibt.

7. Verfahren nach einem der vorhergehenden Ansprüche,
**dadurch gekennzeichnet, dass**
die virtuelle Umgebung (8) eine Weltraumszenerie umfasst, durch welche der die Anzeigeeinrichtung (3) tragende Fahrzeuginsasse (2) virtuell mit einem Raumschiff fliegt, wobei als die virtuelle Inszenierung (12) ein Defekt am Raumschiff auftritt, welcher solange das Kraftfahrzeug (1) am potenziellen Anhaltepunkt (6) steht, repariert wird.

8. Verfahren nach einem der Ansprüche 1 bis 7,
**dadurch gekennzeichnet, dass**
ab einer vorgegebenen Annäherung des Kraftfahrzeugs (1) an die vorgegebene Umgebung (7) des ermittelten potenziellen Anhaltepunkts (6) zumindest ein virtuelles Element innerhalb der virtuellen Umgebung (8) erscheint, welches dazu ausgelegt ist, als Bestandteil der Inszenierung (12) die Verzögerung der virtuellen Fortbewegung innerhalb der virtuellen Umgebung (8) entsprechend der Verzögerung des Kraftfahrzeugs (1) zu bewirken.

9. Verfahren nach Anspruch 8,
**dadurch gekennzeichnet, dass**
falls eine Verzögerung des Kraftfahrzeugs (1) beim Passieren des Anhaltepunkts (6) unterbleibt, das zuvor erschienene virtuelle Element nach Passieren des Anhaltepunkts (6) verschwindet.

10. Verfahren nach einem der Ansprüche 8 oder 9,
**dadurch gekennzeichnet, dass**
die virtuelle Umgebung (8) eine Weltraumszenerie umfasst, durch welche der die Anzeigeeinrichtung (3) tragende Fahrzeuginsasse (2) virtuell mit einem ersten Raumschiff (9) fliegt, wobei als das zumindest eine virtuelle Element ein zweites Raumschiff (10) erscheint und als die virtuelle Inszenierung (12) das erste Raumschiff (9) mittels eines Traktorstrahls (11) des zweiten Raumschiffs (10) entsprechend der Verzögerung des Kraftfahrzeugs (1) verzögert wird.

11. Steuereinrichtung (4), welche dazu eingerichtet ist, eine am Kopf tragbare Anzeigeeinrichtung (3) zum Durchführen eines Verfahren nach einem der vorhergehenden Ansprüche anzusteuern.

12. Kraftfahrzeug (1) mit einer Steuereinrichtung (4) nach Anspruch 11.

## Claims

1. Method for operating a head-mounted display apparatus (3) in a motor vehicle (1), in which the display apparatus (3) is controlled to display a virtual environment (8) within which a vehicle occupant (2) wearing the display apparatus (3) moves virtually in a manner which is adapted to a detected movement of the motor vehicle (1),
**characterised by** the steps:
- determining at least one potential stopping point (6) of the motor vehicle (1);
- as soon as a deceleration of the motor vehicle (1) within a predetermined environment (7) of the determined potential stopping point (6) is detected: controlling the display apparatus (3) to output a virtual enactment (12) within the virtual environment (8) which has the effect of a deceleration of the virtual movement within the virtual environment (8) corresponding to the deceleration of the motor vehicle (1).

2. Method according to claim 1,
**characterised in that**
the at least one potential stopping point (6) of the motor vehicle (1) is a traffic light, a crossroad, a junction of a road, a traffic jam or another vehicle which is stopping.

3. Method according to claim 1 or 2,
**characterised in that**
the at least one potential stopping point (6) of the motor vehicle (1) is detected **in that** at least one of the following provided items of data is evaluated:
- sensor data characterising an environment of the motor vehicle (1):
- digital map data;
- traffic flow data;
- Car2Car data;
- data characterising a driving behaviour of a driver of the motor vehicle (1).

4. Method according to any one of the preceding claims,
**characterised in that**
the virtual enactment (12) is only outputted when the deceleration of the motor vehicle (1) achieves at least one predetermined deceleration strength.

5. Method according to any one of the preceding claims,
**characterised in that**
as soon as the motor vehicle (1), after the deceleration, accelerates with at least one predetermined acceleration, the virtual enactment (12) ends and the virtual movement takes place corresponding to the movement of the motor vehicle (1).

6. Method according to any one of the preceding claims,
**characterised in that**
in the case that a deceleration of the motor vehicle (1) when passing the stopping point (6) does not take place, the virtual enactment (12) also does not take place.

7. Method according to any one of the preceding claims,
**characterised in that**
the virtual environment (8) comprises a space scenery by means of which the vehicle occupant (2) wearing the display apparatus (3) flies virtually in a spaceship, wherein a malfunction occurs in the spaceship as the virtual enactment (12), which is repaired for the time during which the motor vehicle (1) stands at the potential stopping point (6).

8. Method according to any of claims 1 to 7,
**characterised in that**
from a predetermined proximity of the motor vehicle (1) to the predetermined environment (7) of the determined potential stopping point (6) at least one virtual element appears within the virtual environment (8) which is designed, as a component in the enactment (12), to effect the deceleration of the virtual movement within the virtual environment (8) corresponding to the deceleration of the motor vehicle (1).

9. Method according to claim 8,
**characterised in that**
in the case that a deceleration of the motor vehicle (1) when passing the stopping point (6) does not take place, the previously-appearing virtual element vanishes after passing the stopping point (6).

10. Method according to any of claims 8 or 9,
**characterised in that**
the virtual environment (8) comprises a space scenery by means of which the vehicle occupant (2) wearing the display apparatus (3) flies virtually with a first spaceship (9), wherein a second spaceship (10) appears as the at least one virtual element and the first spaceship (9) is delayed as the virtual enactment (12) by means of a tractor beam (11) of the second spaceship (10) corresponding to the deceleration of the motor vehicle (1).

11. Control apparatus (4) which is configured to control a head-mounted display apparatus (3) for carrying out a method according to any of the preceding claims.

12. Motor vehicle (1) having a control apparatus (4) according to claim 11.

## Revendications

1. Procédé de fonctionnement d'un appareil d'affichage (3) portable sur la tête dans un véhicule automobile (1), dans lequel l'appareil (3) est commandé pour afficher un environnement virtuel (8) à l'intérieur duquel un occupant de véhicule (2) portant l'appareil d'affichage (3) se déplace virtuellement en fonction d'un déplacement détecté du véhicule automobile (1),
**caractérisé par** les étapes consistant à :
- déterminer au moins un point d'arrêt potentiel (6) du véhicule automobile (1) ;
- dès qu'un ralentissement du véhicule automobile (1) est détecté à l'intérieur d'un environnement prédéterminé (7) du point d'arrêt potentiel déterminé (6) : commander l'appareil d'affichage (3) pour émettre une mise en scène virtuelle (12) à l'intérieur de l'environnement virtuel (8), laquelle provoque un ralentissement du déplacement virtuel à l'intérieur de l'environnement virtuel (8) correspondant au ralentissement du véhicule automobile (1).

2. Procédé selon la revendication 1,
**caractérisé en ce que**
l'au moins un point d'arrêt potentiel (6) du véhicule automobile (1) est un feu de signalisation, un croisement, une jonction d'une route, un embouteillage ou un autre véhicule à l'arrêt.

3. Procédé selon la revendication 1 ou 2,
**caractérisé en ce que**
l'au moins un point d'arrêt potentiel (6) du véhicule automobile (1) est déterminé en évaluant au moins une des données prévues suivantes :
- des données de capteur caractérisant un environnement du véhicule automobile (1) ;
- des données cartographiques numériques ;
- des données de flux de trafic ;
- des données Car2Car ;
- des données caractérisant le comportement de conduite d'un conducteur du véhicule automobile (1).

4. Procédé selon l'une quelconque des revendications précédentes,
**caractérisé en ce que**
la mise en scène virtuelle (12) n'est émise que si le ralentissement du véhicule automobile (1) atteint au moins une intensité de ralentissement prédéterminée.

5. Procédé selon l'une quelconque des revendications précédentes,
**caractérisé en ce que**
dès que le véhicule automobile (1) accélère après le ralentissement avec au moins une accélération prédéterminée, la mise en scène virtuelle (12) prend fin et le déplacement virtuel s'effectue en conséquence du déplacement du véhicule automobile (1).

6. Procédé selon l'une quelconque des revendications précédentes,
**caractérisé en ce que**
si un ralentissement du véhicule automobile (1) lors du passage du point d'arrêt (6) n'a pas lieu, la mise en scène virtuelle (12) n'a pas lieu non plus.

7. Procédé selon l'une quelconque des revendications précédentes,
**caractérisé en ce que**
l'environnement virtuel (8) comprend une scène spatiale à travers laquelle l'occupant de véhicule (2) portant l'appareil d'affichage (3) vole virtuellement avec un vaisseau spatial, dans lequel un défaut du vaisseau spatial apparaît en tant que mise en scène virtuelle (12), lequel est réparé tant que le véhicule automobile (1) se trouve au point d'arrêt potentiel (6).

8. Procédé selon l'une quelconque des revendications 1 à 7,
**caractérisé en ce que**
à partir d'une approche prédéterminée du véhicule automobile (1) de l'environnement prédéterminé (7) du point d'arrêt potentiel (6) déterminé, au moins un élément virtuel apparaît à l'intérieur de l'environnement virtuel (8), lequel est conçu pour provoquer, en tant que partie constituante de la mise en scène (12), le ralentissement du déplacement virtuel à l'intérieur de l'environnement virtuel (8) en fonction du ralentissement du véhicule automobile (1).

9. Procédé selon la revendication 8,
**caractérisé en ce que**
si le ralentissement du véhicule automobile (1) n'a pas lieu lors du passage du point d'arrêt (6), l'élément virtuel qui est apparu précédemment disparaît après le passage du point d'arrêt (6).

10. Procédé selon l'une quelconque des revendications 8 ou 9,
**caractérisé en ce que**
l'environnement virtuel (8) comprend une scène spatiale à travers laquelle l'occupant de véhicule (2) portant l'appareil d'affichage (3) vole virtuellement avec un premier vaisseau spatial (9), dans lequel un second vaisseau spatial (10) apparaît en tant qu'au moins un élément virtuel et le premier vaisseau spatial (9) est ralenti en tant que mise en scène virtuelle (12) au moyen d'un rayon tracteur (11) du second vaisseau spatial (10) correspondant au ralentissement du véhicule automobile (1).

11. Appareil de commande (4), lequel est configuré pour commander un appareil d'affichage (3) portable sur la tête pour la mise en œuvre d'un procédé selon l'une quelconque des revendications précédentes.

12. Véhicule automobile (1) avec un appareil de commande (4) selon la revendication 11.
